# EUROPEAN PATENT APPLICATION

(11) **EP 4 342 294 A1**
(43) Date of publication of application: **27.03.2024**
(21) Application number: 23188251.5
(22) Date of filing: 27.07.2023
(51) Int. Cl.: A01K 39/014, A01K 61/80

(54) **OMNIDIRECTIONAL FEED EJECTING DEVICE FOR CULTIVATION POOL**

(30) Priority: 21.09.2022 TW 111135698
(71) Applicant: Sunny Rich Agric. & Biotech Co., Ltd., Taipei 106 (TW)
(72) Inventor: Chen, Kuei-Kuang, 106 Taipei City (TW)
(74) Representative: Lang, Christian

(57) **Abstract**

An omnidirectional feed ejecting device for a cultivation pool (4), including a feed supply unit (1) disposed on a periphery of a cultivation pool and a feed supply tube (13). The feed supply unit includes a conveying tube (2) for supplying feed. A supporting portion is coupled with an end portion of the conveying tube and is fixed relative to the cultivation pool. A rotary seat (32) above the cultivation pool is rotatably connected to the end portion of the conveying tube. The rotary seat includes an outlet (321) intercommunicating with the conveying tube. At least one feed ejecting tube (33) includes a connecting section and a bent section. The connecting section is connected to the at least one outlet of the rotary seat and extends in a radial direction of the rotary seat. The bent section is disposed on another end of the connecting section and is at an angle to the connecting section in a horizontal plane and in a vertical plane.

## Description

### BACKGROUND OF THE INVENTION

The present invention relates to an omnidirectional feed ejecting device for a cultivation pool and, more particularly, to a feed ejecting device which can provide omnidirectional ejection of the feed while providing enhanced convenience in installation and use.

In response to the increasing reduction of natural aquatic creatures, such as fishes, shrimps, shellfishes, etc., due to excessive catching, people currently fulfill the needs of aquatic food through artificial cultivation. The artificial cultivation generally uses a cultivation pool to cultivate aquatic creatures, and a cultivator traditionally carries the feed and manually throws the feeds into the cultivation pool to feed the aquatic creatures. However, the manual feeding requires the cultivator to carry the heavy feed and walk around the cultivation pool, causing a great burden to the body. Furthermore, the feeding could be uneven, and the amount of feeding could be insufficient or excessive. In the case of excessive feeding, the creatures cannot eat the feed in time, resulting in a waste and pollution of water. Furthermore, nocturnal creatures, such as shrimps, should be fed at night to achieve a better feeding effect, but night feeding is inconvenient to people.

In a current approach of improving the convenience of feeding, plural feed dispensing devices are disposed in different locations around the cultivation pool. The feed dispensing devices dispense the feed to different angular positions of the cultivation pool, and the time for carrying out the dispensation operation can be set. However, the above approach requires more feed dispensing devices around the cultivation pool to achieve even dispensation of the feed, increasing the cultivation costs.

Taiwan Patent No. I452965 discloses a feed dispensing device which can proceed with 360-degree dispensation of the feed. The feed dispensing device includes a feed supply mechanism disposed on a periphery of a fish pond. A feed dispensing mechanism is disposed in a center of the fish pond. A feed delivery mechanism is disposed between the feed supply mechanism and the feed dispensing mechanism. The feed dispensing mechanism includes a generator and a dispensing disc. Feed dispensing tubes of different lengths are connected to the dispensing disc, such that the feed can be delivered to the dispensing disc through the feed delivery mechanism. The dispensing disc is driven by the generator to rotate, such that the feed can be projected into the fish pond along the feed dispensing tubes under the action of centrifugal force.

Although the above structure can dispense feed to the fish pond more evenly, a generator is required to drive the dispensing disc for generating the centrifugal force, increasing the costs. Furthermore, a cable is required to provide power to the generator in the center of the fish pond, which is inconvenient to power distribution and may cause leakage of electricity and short circuit.

### BRIEF SUMMARY OF THE INVENTION

An objective of the present invention is to provide a feed ejecting device which can provide omnidirectional dispensation of the feed while providing enhanced convenience in installation and use.

An omnidirectional feed ejecting device for a cultivation pool according to the present invention comprises a feed supply unit, a conveying tube, and a feed ejecting unit. The feed supply unit is disposed on a periphery of the cultivation pool. The feed supply unit includes a feed supply tube. Feed is guided into the feed supply tube under an air pressure. The conveying tube includes an end connected to the feed supply tube and another end extending to the cultivation pool and having an end portion. The feed ejecting unit includes a supporting portion, a rotary seat, and at least one feed ejecting tube. The supporting portion is coupled with the end portion of the conveying tube and is fixed relative to the cultivation pool. The rotary seat is spaced from the cultivation pool in a vertical direction perpendicular to the cultivation pool and is rotatably connected to the end portion of the conveying tube. The rotary seat includes a chamber intercommunicating with the conveying tube and at least one outlet intercommunicating with the chamber. The at least one feed ejecting tube includes a connecting section and a bent section. The connecting section has an end connected to the at least one outlet of the rotary seat and extends in a radial direction of the rotary seat. The bent section is disposed on another end of the connecting section and is at an angle to the connecting section in a horizontal plane and in a vertical plane.

In an example, the bent section and the connecting section have a first angle therebetween in the horizontal plane. The first angle is variable to adjust a rotating speed of the rotary seat.

In an example, the feed ejecting device includes a plurality of feed ejecting tubes. The bent section and the connecting section of each of the plurality of feed ejecting tubes have a second angle therebetween in the vertical plane. The second angles of the plurality of feed ejecting tubes are different.

In an example, the supporting portion of the feed ejecting unit is a float.

In an example, the feed ejecting device further comprises at least one positioning string connected to the supporting portion. The supporting portion is anchored to a bank of the cultivation pool by the at least one positioning string. The conveying tube includes a soft bendable portion adjacent to the bank of the cultivation pool.

In an example, the end portion of the conveying tube extends perpendicularly to a water surface of the cultivation pool. A bearing is disposed between the rotary seat and the end portion of the conveying tube.

The feed supply unit according to the present invention can supply the feed in the hopper into the feed supply tube and can convey the feed to the feed ejecting unit via the conveying tube under an air pressure. Then, the feed is ejected toward the cultivation pool after passing through the rotary seat and the bent sections of the feed ejecting tubes. The ejecting direction of the feed is associated with the rotating direction of the rotary seat. Thus, the reaction force of the ejection of the feed causes the rotary seat to rotate automatically relative to the end portion of the conveying tube. Furthermore, the first angle can be adjusted to adjust the rotating speed of the rotary seat.

The second angle of each feed ejecting tube may be adjusted according to the present invention. Therefore, the ejection distances of the feed ejecting tubes can be adjusted to be different. The feed ejecting tubes can rotate automatically, and the rotating speeds and the ejecting distances can be easily adjusted to provide uniform dispensation of the feed. Thus, effects of easier installation, use convenience, and safety use are provided.

The present invention will become clearer in light of the following detailed description of illustrative embodiments of this invention described in connection with the drawings.

### DESCRIPTION OF THE DRAWINGS

FIG. 1 is a schematic side view of an omnidirectional feed ejecting device of an embodiment according to the present invention.
FIG. 2 is a schematic top view of the omnidirectional feed ejecting device of the embodiment according to the present invention.
FIG. 3 is a schematic view illustrating feed ejecting operation of a feed ejecting unit according to the present invention.
FIG. 4 is a schematic side view illustrating the feed ejecting operation according to the present invention.
FIG. 5 is a schematic top view illustrating the feed ejecting operation according to the present invention.
FIG. 6 is a schematic side view of an omnidirectional feed ejecting device of another embodiment according to the present invention.

### DETAILED DESCRIPTION OF THE INVENTION

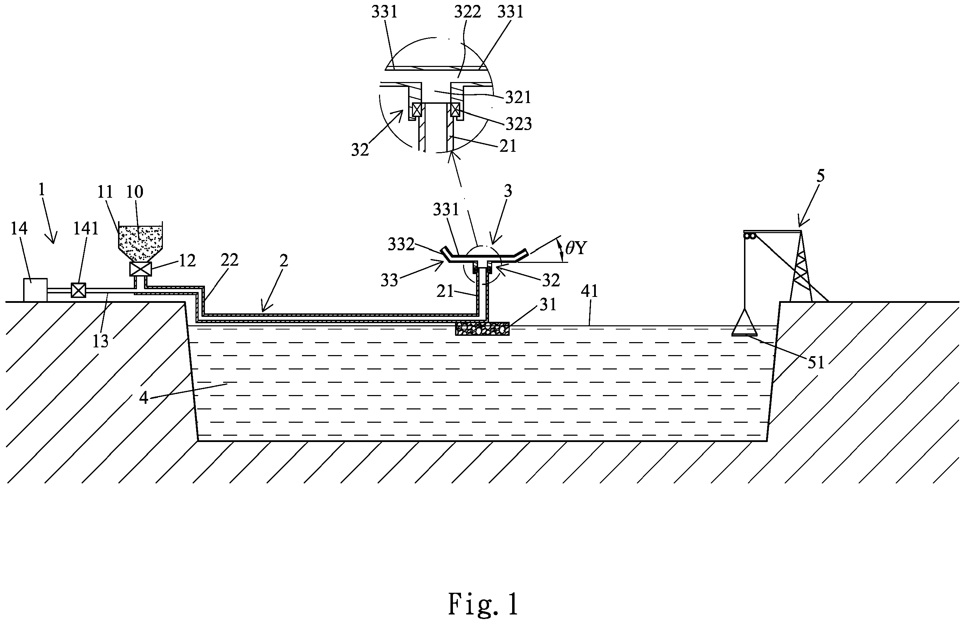

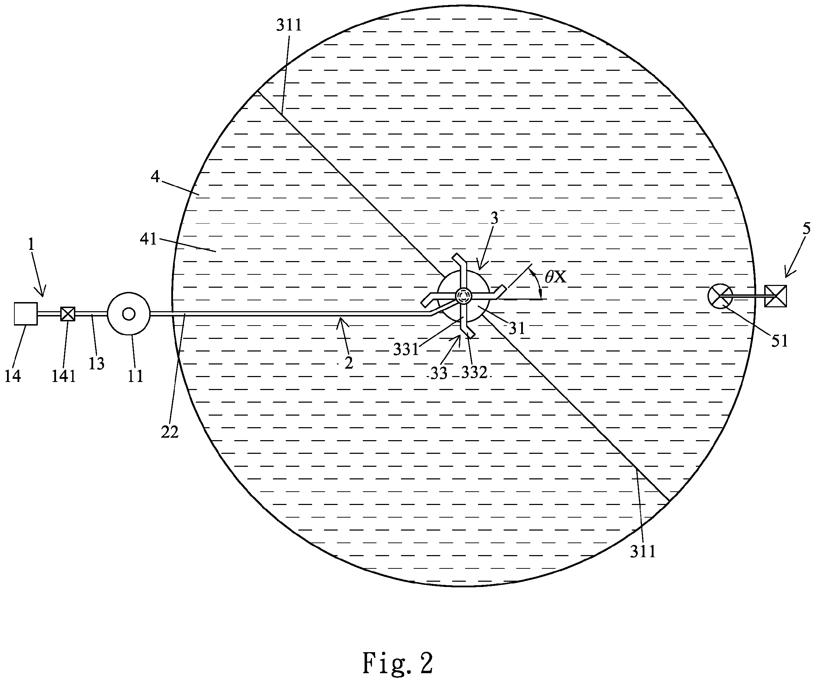

Like elements having similar functions in the following embodiments of the present invention are designated by the same reference numbers. With reference to FIGS. 1 and 2, an omnidirectional feed ejecting device for a cultivation pool 4 according to the present invention comprises a feed supply unit 1, a conveying tube 2, and a feed ejecting unit 3. The feed supply unit 1 includes a hopper 11, a feed control valve 12, a feed supply tube 13, and an air inlet device 14. The hopper 11 is configured to receive feed 10 and includes an outlet connected to the feed control valve 12. The feed supply tube 13 is connected to the feed control valve 12 which controls the amount of the feed 10 to be guided into the feed supply tube 13. The air inlet device 14 is connected to the feed supply tube 13 and may be in the form of a blower, an air compressor, or any other device capable of supplying air. Furthermore, an air inlet control valve 141 may be provided to control the amount of air and the time of inputting air into the feed supply tube 13. Furthermore, the feed supply unit 1 is disposed on a periphery of the cultivation pool 4 and can control the output amount of the feed 10 and the time of outputting the feed 10.

The conveying tube 2 is substantially rectilinear and includes an end connected to the feed supply tube 13 of the feed supply unit 1 and another end extending to a position near the center of the cultivation pool 4. An end portion 21 of the conveying tube 2 extends perpendicularly to the water surface 41 of the cultivation pool 4. Furthermore, the conveying tube 2 includes a soft bendable portion 22 adjacent to the bank of the cultivation pool 4.

In this embodiment, the feed ejecting unit 3 includes a supporting portion 31, a rotary seat 32 and four ejecting tubes 33. The supporting portion 31 is coupled with the end portion 21 of the conveying tube 2 and is positioned at the center of the water surface 41 of the cultivation pool 4. The supporting portion 31 may be in the form of a float floating on the water surface 41 of the cultivation pool 4. Furthermore, the supporting portion 31 is connected to at least one positioning string 311 so as to be anchored to a bank of the cultivation pool 4.

The rotary seat 32 is rotatably connected to the end portion 21 of the conveying tube 2 and is, thus, spaced from the water surface 41 in a vertical direction perpendicular to the cultivation pool 4. The rotary seat 32 includes a chamber 321 intercommunicating with the conveying tube 2 and at least one outlet 322 intercommunicating with the chamber 321. A bearing 323 is disposed between the rotary seat 32 and the end portion 21 of the conveying tube 2.

Each feed ejecting tube 33 includes a connecting section 331 and a bent section 332. The connecting section 331 is rectilinear and has an end connected to an associated outlet 322 of the rotary seat 32. The connecting section 331 extends in a radial direction of the rotary seat 32. The bent section 332 is disposed on another end of the connecting section 331 and is at an angle to the connecting section 331 in a horizontal plane and in a vertical plane. In this embodiment, the bent section 332 and the connecting section 331 have a first angle θX therebetween in the horizontal plane. Furthermore, the bent section 332 and the connecting section 331 have a second angle θY therebetween in the vertical plane. The second angles θY of the feed ejecting tubes 33 may be the same or different. In this embodiment, the second angles θY of the feed ejecting tubes 33 are different from each other. Furthermore, each feed ejecting tube 33 may have holes of the same diameter or different diameters to control the amount of the feed 10 to be ejected. Although the embodiment shown has four feed ejecting tubes 33, the quantity of the feed ejecting tubes 33 according to the present invention may be varied according to needs, such as 1, 2, 3, 5, or any other amount.

According to the present invention, a monitoring device 5 may be disposed on the bank of the cultivation pool 4. A bait platform 51 may be disposed on a periphery of the cultivation pool 4 and near the monitoring device 5. The bait platform 51 may receive the feed 10 ejected from the feed ejecting device to permit monitoring the feeding and growth of the creatures cultivated in the cultivation pool 4.

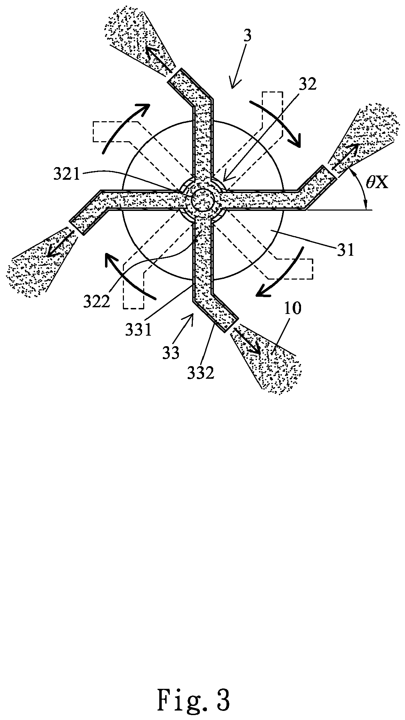

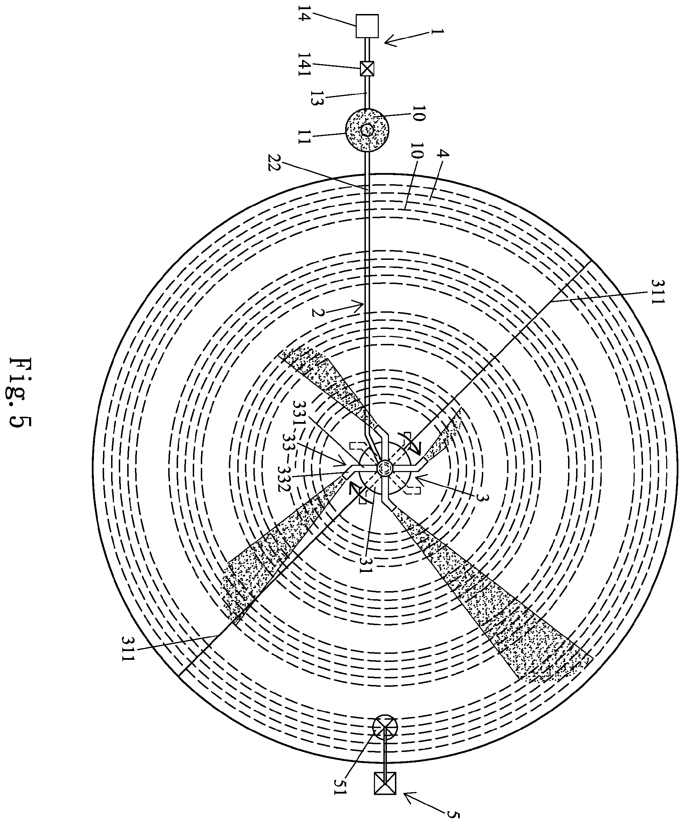

With reference to FIGS. 3-5, the feed supply unit 1 according to the present invention can be connected to an automatic control device (not shown) to automatically control the feed control valve 12 and the air inlet device 14 to thereby supply the feed 10 in the hopper 11 into the feed supply tube 13 within the predetermined time period. The feed 10 is conveyed to the feed ejecting unit 3 via the conveying tube 2 under an air pressure. Then, the feed 10 is ejected toward the cultivation pool 4 after passing through the rotary seat 32 and the bent sections 332 of the feed ejecting tubes 33.

According to the present invention, the ejecting direction of the feed 10 is associated with the rotating direction of the rotary seat 32. Thus, the reaction force of the ejection of the feed 10 causes the rotary seat 32 to rotate automatically relative to the end portion 21 of the conveying tube 2, such as in the clockwise direction, as shown in FIG. 3. Furthermore, the first angle θX can be adjusted to adjust the rotating speed of the rotary seat 32. The rotating speed is faster when the first angle θX is closer to 90 degrees, and vice versa.

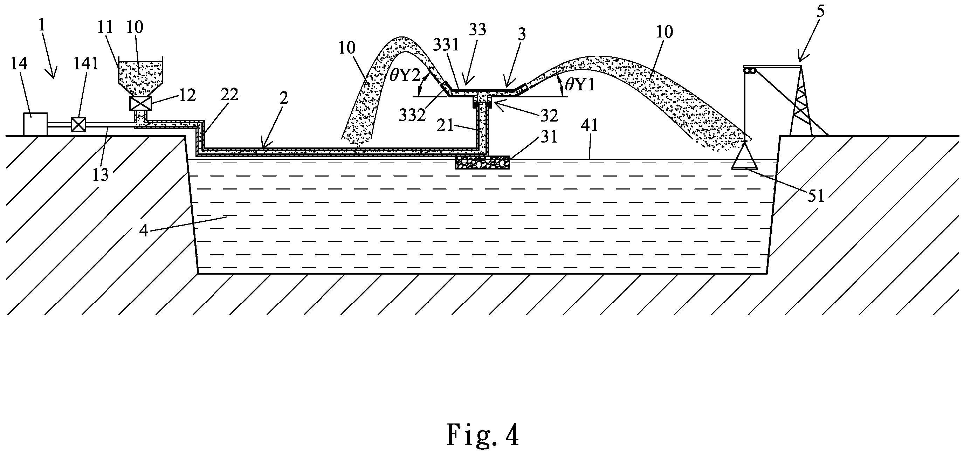

According to the present invention, the second angle θY of each feed ejecting tube 33 may be adjusted. When the second angle θY is closer to 90 degrees, a higher hyperbolic curve is presented, such that the ejection distance is smaller, and vice versa. Therefore, the ejection distances of the feed ejecting tubes 33 can be adjusted to be different. As shown in FIG. 4, the angle θY1 is smaller than the angle θY2, such that the ejection distance of a feed ejection tube 33 having the angle θY1 is greater than the ejection distance of another feed ejection tube 33 having the angle θY2. Therefore, the feed ejecting tubes 33 can automatically rotate relative to the cultivation pool 4 to provide omnidirectional, even dispensation of the feed 10.

In the case that the supporting portion 31 of the feed ejecting unit 3 according to the present invention is a float, the float can be positioned by a positioning string 311, avoiding drifting on the water surface 41 of the cultivation pool 4. When the positioning string 311 is untied, the float can be tugged to the bank, and the bendable portion 22 of the conveying tube 2 can bend during the tugging. Thus, a user on the bank can adjust the first angle θX or the second angle θY of each feed ejecting tube 33 to thereby fulfill the feed ejection ranges for the cultivated creatures. Therefore, convenient adjustment can be provided in response to feeding of the cultivated creatures.

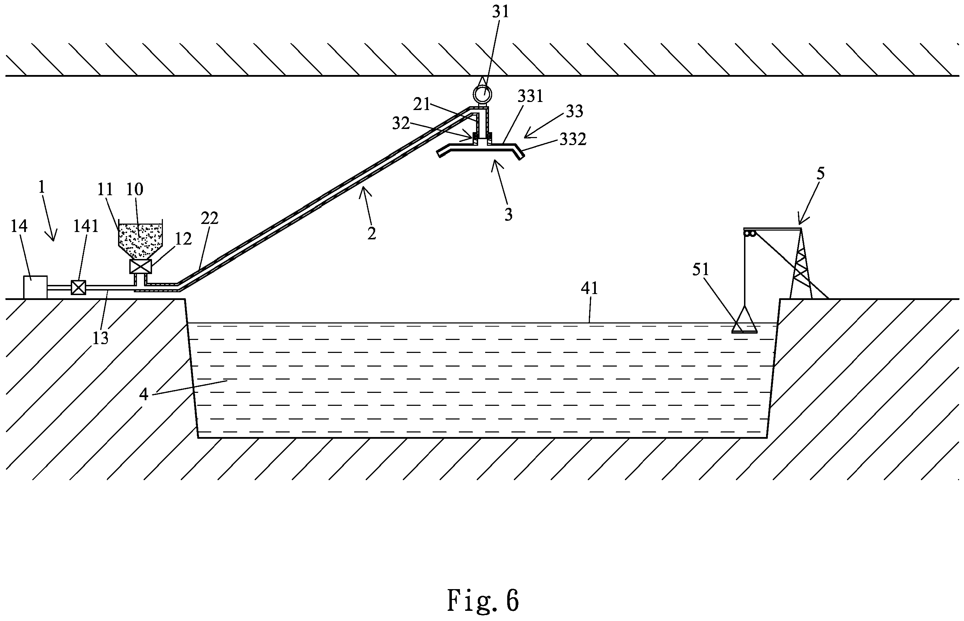

FIG. 6 shows another embodiment of the present invention. In a case that the cultivation pool 4 is an indoor pool, the supporting portion 31 of the feed ejecting unit 3 can be hung below the roof via a hanger, such that each feed ejecting tube 33 faces downward to permit the feed ejecting operation. Therefore, the present invention can be installed in response to the cultivation environment, providing enhanced convenience in installation.

In view of the foregoing, the feed ejecting unit 3 according to the present invention can rotate automatically, and the rotating speed and the ejecting distance of the feed ejecting unit 3 can be easily adjusted to provide uniform dispensation of the feed 10. Furthermore, the present invention provides effects of easier installation, use convenience, and safety use without the risk of leakage of electricity.

The foregoing embodiments are examples of the present invention, not limitation to the present invention. All equivalent changes made in accordance with the spirit of the present invention should also fall within the scope of the present invention.

## Claims

1. An omnidirectional feed ejecting device for a cultivation pool, with the omnidirectional feed ejecting device comprising:
a feed supply unit disposed on a periphery of the cultivation pool, wherein the feed supply unit includes a feed supply tube, and wherein feed is guided into the feed supply tube under an air pressure;
a conveying tube including an end connected to the feed supply tube and another end extending to the cultivation pool and having an end portion; and
a feed ejecting unit including a supporting portion, a rotary seat, and at least one feed ejecting tube, wherein the supporting portion is coupled with the end portion of the conveying tube and is fixed relative to the cultivation pool, wherein the rotary seat is spaced from the cultivation pool in a vertical direction perpendicular to the cultivation pool and is rotatably connected to the end portion of the conveying tube, wherein the rotary seat includes a chamber intercommunicating with the conveying tube and at least one outlet intercommunicating with the chamber, wherein the at least one feed ejecting tube includes a connecting section and a bent section, wherein the connecting section has an end connected to the at least one outlet of the rotary seat and extends in a radial direction of the rotary seat, and wherein the bent section is disposed on another end of the connecting section and is at an angle to the connecting section in a horizontal plane and in a vertical plane.

2. The omnidirectional feed ejecting device for the cultivation pool as claimed in claim 1, wherein the bent section and the connecting section have a first angle therebetween in the horizontal plane, and wherein the first angle is variable to adjust a rotating speed of the rotary seat.

3. The omnidirectional feed ejecting device for the cultivation pool as claimed in claim 1, wherein the at least one feed ejecting tube includes a plurality of feed ejecting tubes.

4. The omnidirectional feed ejecting device for the cultivation pool as claimed in claim 3, wherein the bent section and the connecting section of each of the plurality of feed ejecting tubes have a second angle therebetween in the vertical plane, and wherein the second angles of the plurality of feed ejecting tubes are different.

5. The omnidirectional feed ejecting device for the cultivation pool as claimed in claim 1, wherein the supporting portion of the feed ejecting unit is a float.

6. The omnidirectional feed ejecting device for the cultivation pool as claimed in claim 5, further comprising at least one positioning string connected to the supporting portion, wherein the supporting portion is anchored to a bank of the cultivation pool by the at least one positioning string, and wherein the conveying tube includes a soft bendable portion adjacent to the bank of the cultivation pool.

7. The omnidirectional feed ejecting device for the cultivation pool as claimed in claim 1, wherein the end portion of the conveying tube extends perpendicularly to a water surface of the cultivation pool, and wherein a bearing is disposed between the rotary seat and the end portion of the conveying tube.

8. The omnidirectional feed ejecting device for the cultivation pool as claimed in claim 1, wherein the supporting portion of the feed ejecting unit is a hanger.

9. The omnidirectional feed ejecting device for the cultivation pool as claimed in claim 1, wherein the feed supply unit further includes a hopper, a feed control valve, and an air inlet device, wherein the hopper is configured to receive the feed and includes an outlet connected to the feed control valve, and wherein the feed supply tube is connected between the feed control valve and the air inlet device.

10. The omnidirectional feed ejecting device for the cultivation pool as claimed in claim 9, wherein the air inlet device includes an air inlet control valve.
